# EUROPEAN PATENT APPLICATION

(11) **EP 4 703 858 A1**
(43) Date of publication of application: **04.03.2026**
(21) Application number: 25197640.3
(22) Date of filing: 22.08.2025
(51) Int. Cl.: G06F 3/044, G06F 3/01, G06F 3/0354, G06F 1/16

(54) **INPUT DEVICE WITH TOUCH SENSOR AND HAPTIC DEVICE**

(30) Priority: 26.08.2024 US 202418814742
(71) Applicant: Synaptics Incorporated, San Jose, CA 95131 (US)
(72) Inventor: TAN, Yeh-Cheng, San Jose, 95131 (US); KAO, Scott, San Jose, 95131 (US); SHEN, Xiong, San Jose, 95131 (US)
(74) Representative: J A Kemp LLP

(57) **Abstract**

A system and method for an input device with a haptic sensor assembly are provided. The haptic sensor assembly includes a sensor subassembly with one or more touch sensor devices configured to provide force sensing responsive to pressure from an input object. The sensor subassembly also includes a flexible substrate configured to deform in response to the pressure from the input object. The haptic sensor assembly further includes a haptic subassembly with one or more haptic devices configured to provide haptic feedback in response to detecting the input object. The haptic subassembly also includes a bracket assembly comprising a first bracket portion and a second bracket portion. The one or more haptic devices are supported by the second bracket portion of the bracket assembly. The first bracket portion of the bracket assembly is disposed below the one or more touch sensor devices and configured to be coupled to a reference voltage.

## Description

### TECHNICAL FIELD

This disclosure relates generally to input devices, and more specifically to input devices with touch sensor and haptic devices.

### BACKGROUND

Input devices with touch sensor devices (also commonly called touchpads, touch sensors, forcepads, or other such devices), are widely used in a variety of electronic systems. Input devices typically include a sensing region, often demarked by a surface, in which the input device determines the presence, location, and/or motion of one or more input objects. Touch sensors may also be configured to determine an amount of force or pressure from input objects within the sensing region. Input devices may provide an input interface for an electronic system. For example, input devices may be used for larger electronic systems (such as touch sensor devices integrated in, or peripheral to, notebook or desktop computers, gaming systems, etc.). Input devices may also be used in smaller electronics systems (such as touch screens integrated in cellular phones).

Electronic devices and/or input devices may also include haptic devices configured to provide haptic feedback (e.g., audible and/or vibratory feedback) to a user. For instance, input devices may detect inputs by a user and supply haptic feedback such as audible feedback (e.g., sounds simulating a mouse click) and vibratory feedback (e.g., a vibration) indicating that an input was detected to the user.

### SUMMARY

In an exemplary embodiment, a haptic sensor assembly includes a sensor subassembly and a haptic subassembly. The sensor subassembly includes one or more touch sensor devices configured to provide force sensing responsive to pressure from an input object and a flexible substrate configured to deform in response to the pressure from the input object. The haptic subassembly includes one or more haptic devices configured to provide haptic feedback in response to detecting the input object; and a bracket assembly comprising a first bracket portion and a second bracket portion. The one or more haptic devices are supported by the second bracket portion of the bracket assembly. The first bracket portion of the bracket assembly is disposed below the one or more touch sensor devices and configured to be coupled to a reference voltage.

In another exemplary embodiment, an input device includes a processing system, a sensor subassembly and a haptic subassembly. The processing system is coupled to a memory and is configured to detect an input object and to provide haptic feedback in response to the detected input object. The sensor subassembly includes one or more touch sensor devices configured to provide force sensing responsive to pressure from the input object; and a flexible substrate configured to deform in response to the pressure from the input object. The haptic subassembly includes one or more haptic devices configured to provide haptic feedback in response to detecting the input object; and a bracket assembly comprising a first bracket portion and a second bracket portion. The one or more haptic devices are supported by the second bracket portion of the bracket assembly. The first bracket portion of the bracket assembly is disposed below the one or more touch sensor devices and is configured to be coupled to a reference voltage.

In yet another exemplary embodiment, a method of making a haptic sensor assembly includes forming a support bracket comprising first bracket portions and second bracket portions; forming a haptic subassembly comprising a plurality of haptic devices, wherein the plurality of haptic devices are in contact the second bracket portions; forming a sensor subassembly comprising a flexible substrate and a plurality of force sensors, wherein the plurality of force sensors are configured for capacitive sensing; and forming the haptic sensor assembly by bringing the haptic subassembly in contract with the sensor subassembly such as the first bracket portions are disposed below the plurality of force sensors.

### BRIEF DESCRIPTION OF THE DRAWINGS

**FIG. 1** is a block diagram depicting an input device with touch sensor according to certain embodiments.
**FIG. 2** is a block diagram depicting an input device with haptic sensor assembly according to certain embodiments.
**FIG. 3** shows a bottom view of a haptic sensor assembly according to certain embodiments.
**FIG. 4A & FIG. 4B** show side views of a haptic sensor assembly according to certain embodiments.
**FIG. 5** shows and exploded view of a portion of an input device with a haptic sensor assembly according to certain embodiments.
**FIG. 6A** **&** **6B** show examples of embodiments of support structures for a haptic sensor assembly according to certain embodiments.
**FIG. 7** shows an example of a haptic film assembly.
**FIG. 8** shows an example of performance characteristics of a haptic sensor assembly according to certain embodiments.
**FIG. 9** shows an example of performance characteristics of a haptic sensor assembly according to certain embodiments.
**FIG. 10** shows an example of a method of making a haptic sensor assembly according to certain embodiments.

### DETAILED DESCRIPTION

The following detailed description is exemplary in nature and is not intended to limit the disclosure or the application and uses of the described embodiments. Furthermore, there is no intention to be bound by any expressed or implied theory presented in the preceding background, summary and brief description of the drawings, or the following detailed description. Numerous specific details are set forth in order to provide a more thorough understanding of the disclosed technology. However, it will be apparent to one of ordinary skill in the art that the disclosed technology may be practiced without these specific details. In other instances, well-known features have not been described in detail to avoid unnecessarily complicating the description.

Various examples of the present disclosure provide input devices and methods that integrate one or more touch sensors and haptic devices. In some implementations, the touch sensor may include a force sensor. Performance of a touch sensor, such as a force sensor, can be impacted by the structure of electronic devices into which they are incorporated. For example, some force sensors use capacitive sensing to determine displacement (e.g., deformation or bending) between a sensing surface and a reference plane. In certain implementations, force applied to a force sensor relies on both displacement of the sensing surface and the reference plane. Such configurations are susceptible to performance variation and even degradation based on a variety of factors including manufacturing variations and suboptimal tolerance of the overall electronic device and touch sensor related components. Performance variation can further arise when haptic devices are integrated into the electronic device. Embodiments described herein provide reliable touch sensing by mitigating against negative effects caused by manufacturing variations and tolerance issues while at the same time providing for integration of haptic devices without significantly degrading performance of the touch sensor, e.g., allowing for accurate force sensing across the sensing surface.

By way of example, the present disclosure describes an input device with electronic circuits, e.g., touch sensor, configured to obtain signals that measure deflection of a force sensor including, for example, a flexible substrate and/or face sheet for force measurements, e.g., using capacitive measurements, and to provide haptic feedback via one or more haptic devices, e.g., piezoelectric device or actuator or other types of haptic devices.

As an example, an input device such as a portable device (e.g., laptop) may use touchpad and/or forcepad technology (e.g., a touchpad that includes finger pressure or force sensitivity) and may include a haptic actuator (e.g., a piezoelectric device) in order to generate an appropriate click to emulate the mechanical click of a regular touchpad. The forcepad may measure the force applied anywhere on the surface and when the force applied exceeds a threshold, a haptic actuator may provide haptic feedback as if there was a mechanical click. Such features can mimic traditional touchpads that include a mechanical mechanism which provides a clicking noise and feeling as they are actuated and/or depressed. By contrast, conventional input devices (e.g., certain touchpads such as touchpads with the forcepad technology), when actuated or depressed, often do not physically generate a clicking noise or feeling.

Among other advantages, the input device herein may include a haptic sensor assembly that integrates both haptic devices and force sensor devices. The haptic devices are integrated in a way that minimizes interference with the force sensor while providing effective haptic feedback. The haptic sensor assembly may, in certain embodiments, be attached or integrated at least partially to a frame of the input device.

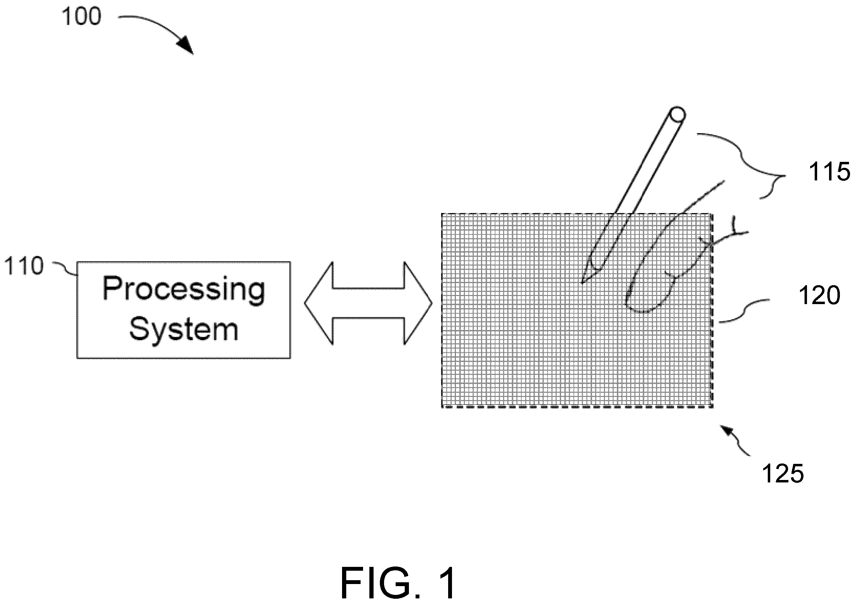

**FIG. 1** is a block diagram depicting an input device 100 according to one or more examples of the present disclosure. The input device 100 may include a processing system 110, a sensing region 120, and touch sensor 125. The touch sensor 125 may be configured to detect proximity (e.g., location) and/or force corresponding to an input object. The input device may include one or more haptic devices such as a piezoelectric device, which are described further below.

The input device 100 may be configured to provide input to an electronic system. As used herein, the term "electronic system" (or "electronic device") broadly refers to any system capable of electronically processing information. Non-limiting examples of electronic systems include personal computers of all sizes and shapes, such as desktop computers, laptop computers, netbook computers, tablets, web browsers, e-book readers, personal digital assistants (PDAs), and wearable computers (such as smart watches and activity tracker devices). Additional examples of electronic systems include composite input devices, such as physical keyboards that include input device 100 and separate joysticks or key switches. Further examples of electronic systems include peripherals such as data input devices (including remote controls and mice), and data output devices (including display screens and printers). Other examples include data output devices (e.g., display screens and printers), remote terminals, kiosks, and video game machines (e.g., video game consoles, portable gaming devices, and the like). Other examples include communication devices (including cellular phones, such as smart phones), and media devices (including recorders, editors, and players such as televisions, set-top boxes, music players, digital photo frames, and digital cameras). Additionally, the electronic system may be a host or a slave to the input device.

The input device 100 may be implemented as a physical part of the electronic system, or can be physically separate from the electronic system. As appropriate, the input device 100 may communicate with parts of the electronic system using any one or more of the following: buses, networks, and other wired or wireless interconnections. Examples include Inter-Integrated Circuit (I2C), Serial Peripheral Interface (SPI), Personal System/2 (PS/2), Universal Serial Bus (USB), Bluetooth, radio frequency (RF), and Infrared Data Association (IRDA).

In some examples, the touch sensor 125 may correspond to a proximity sensor device configured to sense input provided by one or more input objects 115 in the sensing region 120. Example input objects 115 include fingers, styli, and the like. The sensing region 120 may encompass any space above, around, in, and/or proximate to the input device 100 in which the input device 100 is able to detect user input (such as provided by one or more input objects 115). The size, shape, and/or location of the sensing region 120 (e.g., relative to the electronic system) may vary depending on actual implementations.

The touch sensor 125 may include functionality to perform proximity and/or force detection. Force detection is the ability to detect an amount of force or pressure applied to an input surface of the sensing region 120. Proximity detection is the ability to sense location of one or more input objects 115 relative to the sensing region 120. As described herein, proximity and/or force may be detected using capacitive sensing by, for example, using transmitter and receiver electrodes. The electrodes used for proximity sensing may be the same or different from electrodes used for force sensing. For example, the electrodes used for proximity sensing may be disposed on or in a first layer of a substrate while electrodes used for force sensing may be disposed on or in a second layer of the substrate. Alternatively, the electrodes used for proximity sensing may disposed on a first substrate while the electrodes used for force sensing may be disposed on a second substrate. Examples of capacitive sensors implemented for for both proximity and force sensing are described in U.S. Patent No. 10,592,057, the entire contents of which are expressly incorporated herein by reference.

In some variations, the sensing region 120 extends from a surface of the input device 100 in one or more directions into space, for example, until a signal-to-noise ratio falls below a threshold suitable for object detection. For example, the distance to which this sensing region 120 extends in a particular direction, in various examples, may be on the order of less than a millimeter, millimeters, centimeters, or more, and may vary with the type of sensing technology used and/or the accuracy desired. In some instances, the input device 100 detects inputs involving no physical contact with any surfaces of the input device 100 (e.g., hovering), contact with an input surface (e.g. a touch surface) of the input device 100, contact with an input surface of the input device 100 coupled with some amount of applied force or pressure, and/or a combination thereof.

In various examples, input surfaces may be provided by surfaces of a housing of the input device 100 within which the sensor electrodes reside, by face sheets (also referred to as an input surface or cover layer) applied over the sensor electrodes or any casings, etc. In some variations, the sensing region 120 has a rectangular shape when projected onto an input surface of the input device 100 although it will be understood that the sensing region 120 may be of any suitable size and shape.

In some instances, the input device 100 may use various sensing technologies to detect user input. Example sensing technologies may include capacitive sensing technologies and/or other types of sensing technologies. The sensing region 120 may include one or more capacitive sensing elements (e.g., sensor electrodes such as transmitter and receiver electrodes) to create an electric field. The input device 100 may detect inputs based on changes in capacitance of the sensor electrodes. For example, an object in contact with (or close proximity to) the electric field may cause changes in capacitance and hence the voltage and/or current in the sensor electrodes. Such changes in voltage and/or current may be detected as "signals" indicative of user input. The sensor electrodes may be arranged in arrays or other configurations to detect inputs at multiple points within the sensing region 120. In some aspects, some sensor electrodes may be ohmically shorted together to form larger sensor electrodes. Some capacitive sensing technologies may use resistive sheets that provide a uniform layer of resistance. Measurements in capacitance change can be made via, for example, analog to digital converters connected to the sensor electrodes and coupled to the processing system 110.

Example capacitive sensing technologies may be based on "self-capacitance" (also referred to as "absolute capacitance") and/or "mutual capacitance" (also referred to as "transcapacitance"). Absolute capacitance sensing methods detect changes in the capacitive coupling between sensor electrodes and an input object. For example, an input object near the sensor electrodes may alter the electric field near the sensor electrodes, thus changing the measured capacitive coupling. In some variations, the input device 100 may implement absolute capacitance sensing by modulating sensor electrodes with respect to a reference voltage and detecting the capacitive coupling between the sensor electrodes and input objects. The reference voltage may be substantially constant or may vary. In some aspects, the reference voltage may correspond to a ground reference voltage although other direct current (DC) or alternating current (AC) voltages may be employed.

Transcapacitance sensing methods detect changes in the capacitive coupling between sensor electrodes. For example, an input object or ground near the sensor electrodes may alter the electric field between the sensor electrodes, thus changing the measured capacitive coupling of the sensor electrodes. In some instances, the input device 100 may implement transcapacitance sensing by detecting the capacitive coupling between one or more transmitter sensor electrodes (also "transmitter electrodes" or "transmitter") and one or more receiver sensor electrodes (also "receiver electrodes" or "receiver"). Signals on the transmitter sensor electrodes may be modulated relative to a reference voltage (e.g., system ground) to transmit transmitter signals while receiver sensor electrodes may be held at a substantially constant voltage relative to the reference voltage to receive resulting signals. The reference voltage may be a substantially constant voltage or may be system ground. The resulting signal may be affected by environmental interference (e.g., other electromagnetic signals) as well as input objects or ground in contact with, or in close proximity to, the sensor electrodes.

The processing system 110 may be configured to operate the hardware of the input device 100 to detect input in the sensing region 120. In some instances, the processing system 110 may control one or more sensor electrodes to detect objects in the sensing region 120. For example, the processing system 110 may include parts of or all of one or more integrated circuits (ICs) and/or other circuitry components that are configured to transmit signals (sensing signals) via one or more transmitter sensor electrodes and receive signals (resulting signals) via one or more receiver sensor electrodes. In some aspects, one or more components of the processing system 110 may be co-located, for example, in close proximity to the sensing elements of the input device 100. In other aspects, one or more components of the processing system 110 may be physically separated from the sensing elements of the input device 100. For example, the input device 100 may be a peripheral coupled to a computing device, and the processing system 110 may be implemented as software executed by a central processing unit (CPU) of the computing device. In another example, the input device 100 may be physically integrated in a mobile device, and the processing system 110 may correspond, at least in part, to a CPU of the mobile device.

In some examples, the processing system 110 may be implemented as a set of modules that are implemented in firmware, software, or a combination thereof. Example modules include hardware operation modules for operating hardware such as sensor electrodes, haptic devices, display screens, data processing modules for processing data such as sensor signals and positional information, and reporting modules for reporting information. In some variations, the processing system 110 may include sensor operation modules configured to operate sensing elements to detect user input in the sensing region 120, identification modules configured to identify gestures such as mode changing gestures, and mode changing modules for changing operation modes of the input device 100 and/or electronic system. The processing system 110 may include an integrated non-transitory memory and/or one or more separate memories for storing executable code and data related to operation of the touch sensors, haptic devices, display and the like.

The processing system 110 may operate the sensing elements of the input device 100 to produce electrical signals for sensing (sensing signals) and receiver responsive signals (resulting signals) indicative of input (or lack of input) in the sensing region 120. The processing system 110 may perform any appropriate amount of processing on the electrical signals to translate or generate the information provided to the electronic system. For example, the processing system 110 may digitize analog signals received via the sensor electrodes and/or perform filtering or conditioning on the received signals. Analog to digital conversation may also be provided by separate circuitry. In some aspects, the processing system 110 may subtract or otherwise account for a "baseline" associated with the sensor electrodes. For example, the baseline may represent a state of the sensor electrodes when no user input is detected. The information provided by the processing system 110 to the electronic system may reflect a difference between the signals received from the sensor electrodes and a baseline associated with each sensor electrode.

In some examples, the sensing region 120 or other region of the input device may be activated by the haptic feedback. For instance, based on one or more obtained sensor measurements, the processing system 110 provides haptic feedback to a user using the sensing region 120 or other region. The haptic feedback may, for example, be vibratory or audible.

While **FIG. 1** shows an exemplary configuration of components, other configurations may be used without departing from the scope of the disclosure. For example, various components may be combined to create a single component. As another example, operations performed by a single component may be performed by two or more components.

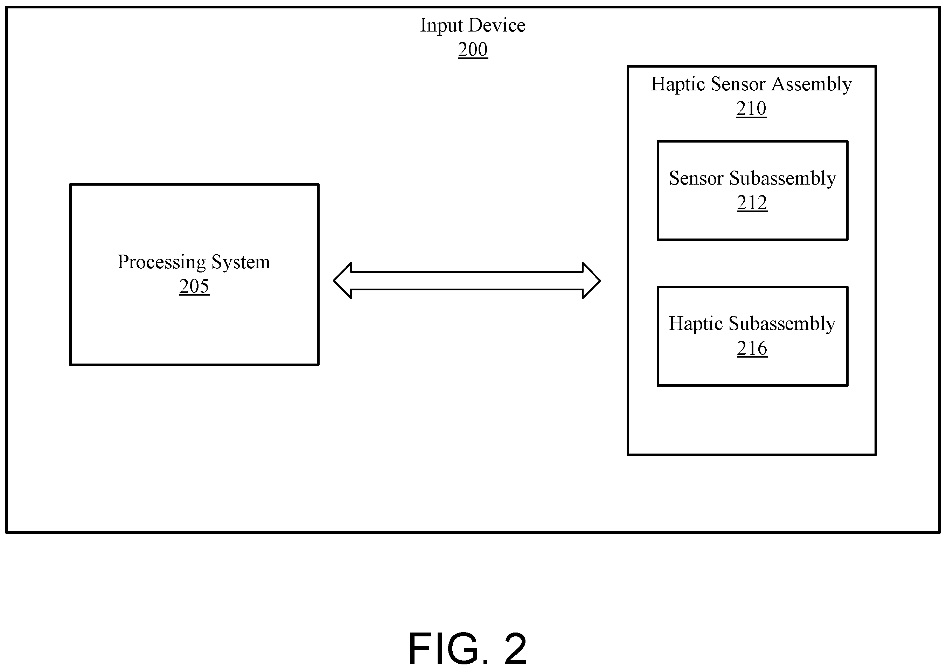

**FIG. 2** is a block diagram depicting an input device 200 according to one or more examples of the present disclosure. The input device 200 may be an example of the input device 100 of **FIG. 1****.**

The input device 200 may include a haptic sensor assembly 210 and a processing system 205. The haptic sensor assembly 210 may include a sensor subassembly 212, which in certain implementations includes one or more touch sensors implementing force sensing and/or proximity sensing.

In certain embodiments, the haptic sensor assembly 210 may include a haptic subassembly 216, which may include way of example one or more haptic devices. The haptic devices may be any type of device that provides haptic feedback. For example, certain embodiments herein use a piezoelectric device or actuator to provide sensory feedback such as vibration to a user. Such haptic devices use piezo materials to generate vibrations and haptic responses when material in the device is compressed or bent. The piezoelectric device vibrates at different frequencies when driven with different signals (haptic signals) by, for example processing system 205. Other suitable haptic devices may also be used.

The sensor subassembly 212 may implement capacitive sensing. In some instances, the sensor subassembly 212 may include a flexible substrate such as a printed circuit board assembly (PCBA) that includes or is in contact with the touch sensors. For example, the touch sensors may comprise an array of electrodes (e.g., rows and columns of traces) that form transmitter and receiver electrodes such as in the case of capacitive sensors used for capacitive sensing of touch, e.g., proximity and/or force. The PCBA assembly may include one or more PCBAs. Separate arrays of electrodes may be used to implement proximity and force detection.

The sensor subassembly 212 and the haptic subassembly 216 may be coupled to the processing system 205. The processing system 205 may include hardware and/or software elements. The processing system 205 controls operation of the sensor subassembly 212 and the haptic subassembly 216 including operation of the touch sensors and the haptic devices. For example, the touch sensors may include capacitive sensors and the processing system 205 may operate the capacitive sensors to determine a pressure (force) and/or proximity (position) associated with an input object (e.g., input object 115). Pressure may be determined by determining an amount of capacitance present between, for example, a flexible substrate, e.g., PCBA on which transmitter and receiver electrodes reside and a reference, such as ground. The capacitance will vary depending on the amount of deflection encountered by the PCBA. Such deflection can be considered to occur in a relative "z" axis. Positional information can be ascertained across relative "x-y" axes via the transmitter and receiver electrodes using either transcapacitance or absolute capacitance as previously described.

In some instances, the processing system 205 may include a touch controller or processor (e.g., a controller or processor configured to detect user input and/or perform actions). In other instances, the touch controller may be separate from the processing system 205. For example, the processing system 205 may include circuitry that couples or connects the touch controller with the capacitive sensors.

The processing system 205 may control the haptic subassembly 216 to provide haptic feedback to a user. For instance, the processing system 205 may provide haptic feedback in response to signals from the touch sensor 302. The haptic subassembly 216 is controlled by signals from the processing system 205, which can for example control vibration of individual haptic devices. It will be understood that the processing system 205 used to control the haptic feedback may be the same as the processing system used to control the touch sensors. Alternatively, different processing systems may be used to the control the touch sensors and the haptic devices.

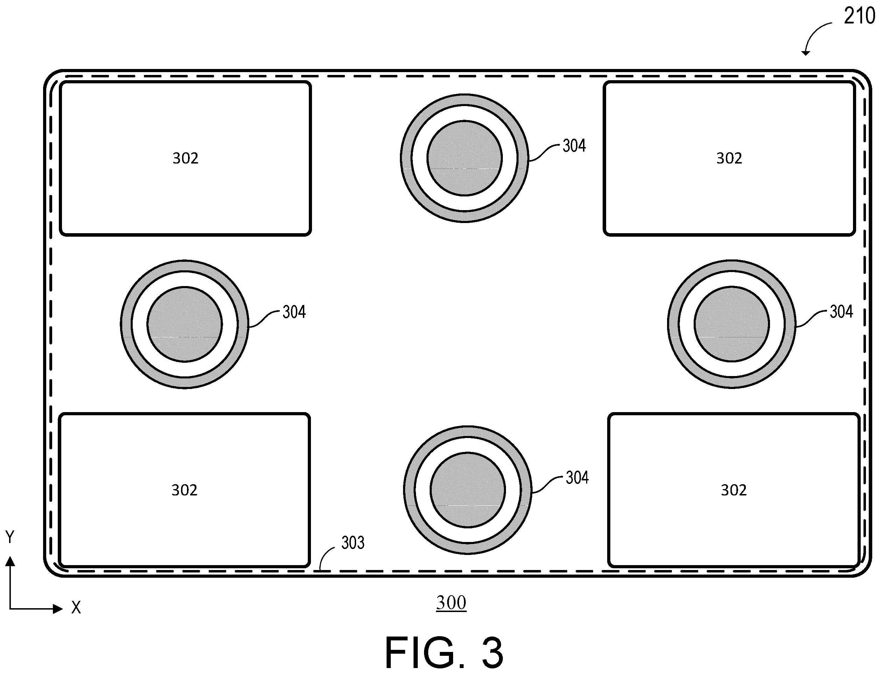

**FIG. 3** shows a bottom view 300 of an example of an embodiment of haptic sensor assembly 210. The haptic sensor assembly 210 includes four touch sensor devices 302 configured for force sensing and four haptic devices 304. The haptic sensor assembly 210 may also include touch sensor 303 configured for proximity sensing to determine the location of an input object. It will be appreciated that the number and position of the touch sensor devices 302 and haptic devices 304 is by way of example and not limitation.

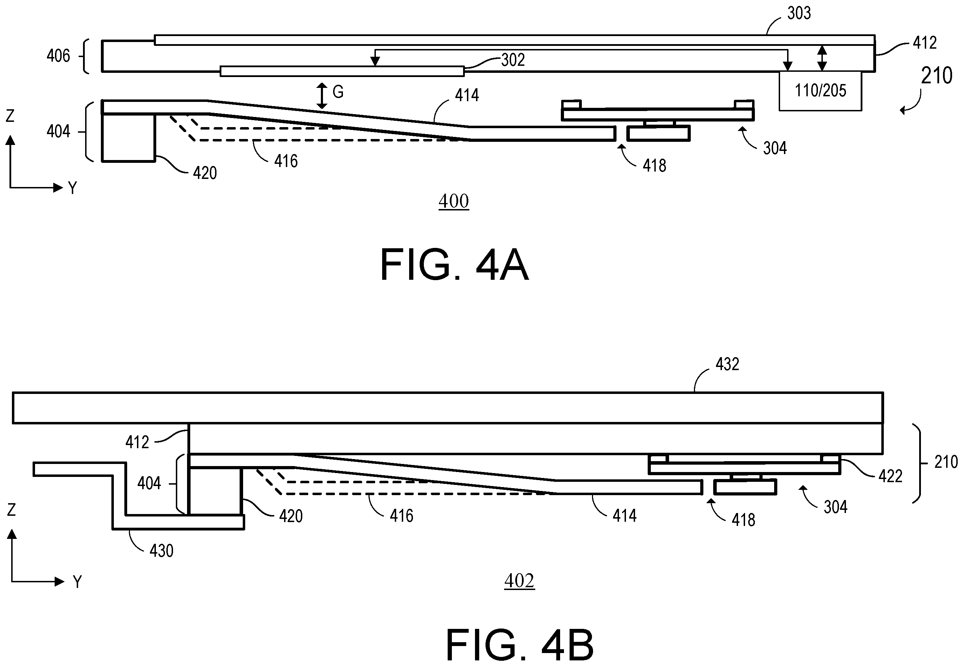

In the embodiment shown, the haptic devices 304 are shown to be disposed in a pattern separated from the touch sensor devices 302 relative to a horizontal (x-y) plane. In other embodiments, the touch sensor devices 302 may be proximate or overlapping to the haptic devices 304 when viewed in the x-y plane. For example, the haptic devices 304 may be underneath the touch sensors 302 relative to a vertical (z) direction. The haptic sensor assembly 210 may or may not include support brackets as described in connection with **FIGs. 4A - 6B****.**

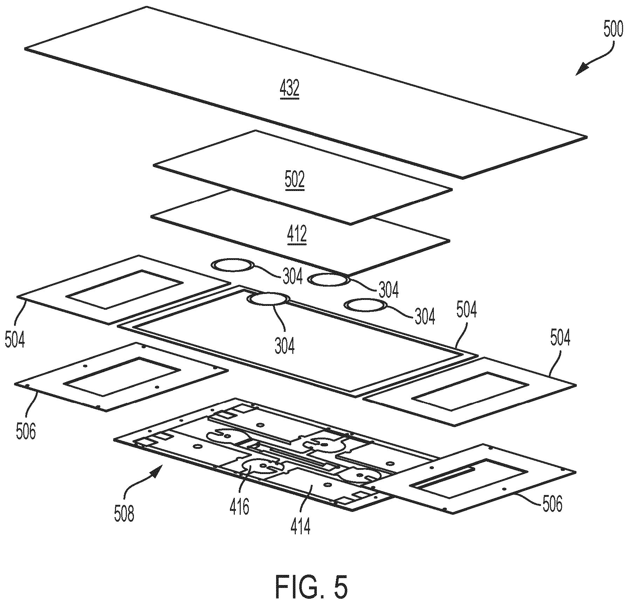

**FIG. 4A** illustrates a side view 400 of a haptic sensor assembly 210. The haptic sensor assembly 210 comprises a haptic subassembly 404 and a sensor subassembly 406. In the view shown, one haptic device 304, one touch sensor device 302 configured for force sensing, and one touch sensor device 303 configured for proximity sensing are illustrated. However, it will be appreciated that an input device or haptic sensor assembly 210 may have any suitable number of haptic devices and touch sensor devices as shown, for example, in **FIG. 3** and **FIG. 5****.**

The sensor subassembly 406 includes the touch sensor device 302 and a flexible substrate 412. The flexible substrate 412 includes in certain embodiments a printed circuit board assembly (PCBA). The flexible substrate 412 may include a portion or all of processing system 110, 205, touch controller or other control circuitry, which among things may be configured to control the touch sensor devices 302, 303 and/or the haptic device 304.

The touch sensor device 302 may be configured for capacitive force sensing. When, for example, force is applied to the substrate 412, a gap G between the touch sensor device 302 and a reference, such as first bracket portion 414 or second bracket portion 416 decreases. The change in the gap G can be detected by a change in capacitance as determined from signals from the electrodes of the touch sensor 302 and a reference signal applied to the reference, e.g., the first bracket portion 414 and/or the second bracket portion 416.

The touch sensor device 303 may detect positional information relating to proximity of an input object to the sensor or horizontal movement of the input object. Capacitive sensing may be performed by transmitter and receiver electrodes that form part of the sensor 302. The transmitter and receiver electrodes for force sensing and proximity may be disposed in different layers of the substrate 412, e.g., PCBA, as shown and as previously described in the aforementioned U.S. Patent No. 10,592,057.

The haptic subassembly 404 includes the haptic device 304 and in certain embodiments includes mounting and support structures such as the first bracket portion 414 and the second bracket portion 416. In certain embodiments, the haptic device 304 is a piezoelectric device. However, other types of haptic sensors may be employed such as liner resonant actuators or other suitable types of haptic device. The first bracket portion and/or the second bracket portion may be connected to the reference signal.

A gap 418 is shown between the haptic device 304 and the first bracket portion 414 and/or the second bracket portion 416. As shown in the illustrations that follow, in plan view, portions of the backet 414 or 416 may connect to the haptic device 304 in at least certain portions. Maintaining a gap between portions of bracket 414, 416 and the haptic device 304 in certain locations facilitates performance of the haptic device 304 and sensor 302 when the haptic device 304, brackets 414, 416 or other structure of the input device deviate from optimal tolerances or to account for manufacturing variations.

The first bracket portion 414 is shown as angled relative to the flexible substrate 412, and consequently the touch sensor device 302. The second bracket portion 416 is shown as relatively horizontal compared to the flexible substrate 412 and the touch sensor device 302. The first bracket portion 414 is, for example, angled in a portion disposed below the touch sensor device 302. Providing the angled portion of the first bracket portion 414 can in certain implementations improve performance of the touch sensor device 302 in areas where the substrate 412 may lack maximum flexibility, e.g., edge areas of haptic sensor assembly 210 as compared to portions of the flexible substrate 412 disposed away from the edge portions, e.g., closer to the center of the haptic sensor assembly 210. The first bracket portion 414 and the second bracket portion 416 may be made of suitable material, such as a conductive material including sheet metal. In other embodiments, the first bracket portion and the second bracket portion may be made of non-conductive material, e.g., plastic or other non-conductive material. Non-conductive material may be used, for example, for some or all of the bracket when not used as a reference voltage for force sensing.

As described further below in connection with **FIG. 4B****,** the haptic subassembly 404 may be in contact or close proximity to the flexible substrate 412, e.g., such that vibration or other response of the haptic device 304 can be sensed by a user.

**FIG. 4B** shows a side view 402 of a portion of an input device 200 according to one or more examples including the haptic sensor assembly 210 shown and described in connection with **FIG. 4A****.** As previously described, the haptic subassembly 404 may be in contact with the flexible substrate 412. Contact may be facilitated by any suitable means. For example, when installed in an input device, such as shown in **FIG. 4B****,** contact may be maintained through pressure caused by the first bracket portion 414 and/or second bracket portion 416 either alone or in combination with other structure of the input device. Additionally, a mounting member 420 may facilitate contact via, for example a screw or other securing means. Yet further, contact between the haptic subassembly 404 and sensor subassembly 406 may be facilitated by an adhesive 422, such as pressure sensitive adhesive (PSA) interposed between the haptic subassembly 404 and the sensor subassembly 406 or portions thereof.

Mounting member 420 may further provide a mechanism to connect the haptic subassembly 404 to, for example, a frame part 430 of an input device. In other embodiments, the haptic subassembly 404 may be integrated into, or be an integral part of, the frame part 430. In yet other embodiments, the haptic subassembly 404 is not connected or integrated into any frame part of the input device.

Also shown cover layer, e.g., face sheet, 432. The cover layer 432 may be made of any suitable material such as transparent or translucent materials including glass or plastic of varying types. Alternatively, the cover layer 432 may be made of an opaque material. The cover layer 432 and flexible substrate 412 may be made of deformable, yet resilient, material to facilitate operation of sensor 302 when used for force sensing. In certain embodiments, the brackets 414 and/or 416 do not deform during force sensing, which facilitates reliable operation of touch sensor device 302 when detecting change in capacitance for force sensing measurements.

**FIG. 5** shows an example of an exploded view 500 of a portion of input device with the haptic sensor assembly 210 including various components of the sensor subassembly 406 and the haptic subassembly 404.

Shown are the cover layer 432, the flexible substrate 412, haptic devices 304, and the first bracket portion 414 and the second bracket portion 416. The first bracket portion 414 and the second bracket portion 416 form part of bracket assembly 508. As previously described, the first bracket portion 414 may at least in part be angled to facilitate performance of sensors 302 (not shown), which may be disposed in the flexible substrate 412, e.g., PCBA.

Also shown are a first layer 502 and a second layer 504. The first layer 502 may be an adhesive, such as PSA, which facilitates securing the flexible substrate 412 to the cover layer 432. The second layer 504 may also be an adhesive, such as a PSA, which facilitates securing the brackets 414 and 506 to the face sheet 432 or other system components. In certain embodiments, the brackets 506 may form palm brackets for the input device.

The haptic devices 304 may be piezo discs. In certain embodiments, the piezo discs may be made as a polyethylene terephthalate (PET) film module. The haptic devices 304 may also include an adhesive, such as PSA, to facilitate connection to the flexible substrate 412 and/or brackets 416. As previously described, the cover layer 432 and flexible substrate 412 are designed to be displaced when force is applied. The bracket assembly 508 may be configured to be non-deformable during touch sensing such as force sensing.

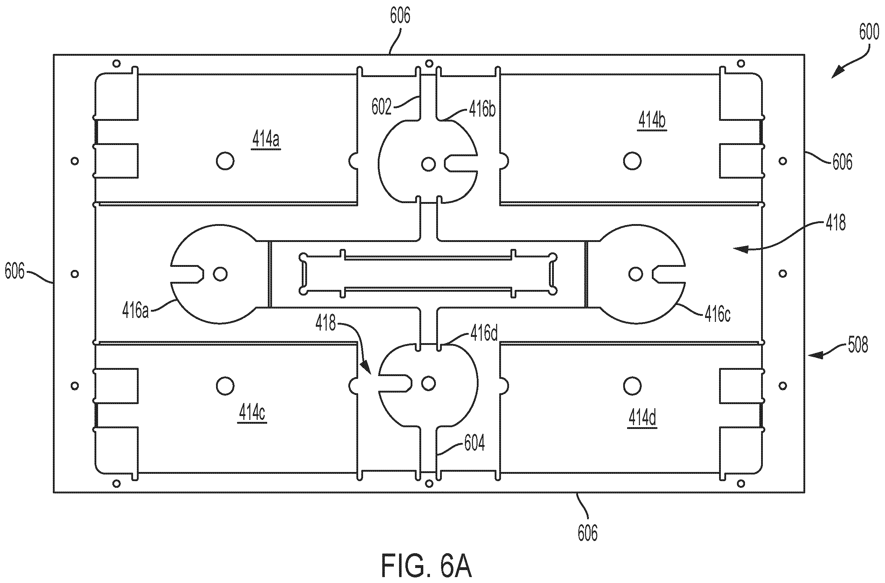

**FIG. 6A** shows a plan view 600 of an example of bracket assembly 508 such as the example described in connection with **FIG. 5** and **FIGs. 4A- 4B** . As previously described, first bracket portions 414a - 414d are generally disposed below sensors 302 and may be coupled to a reference voltage, which may be ground or a different AC or DC voltage. The bracket portions 414a - 414d may be angled to improve performance of the touch sensor device 410 when used for capacitive force sensing. In other embodiments, the bracket portions 414a - 414d are not angled. The bracket portions 414a - 414d may be configured to be relatively fixed, e.g., non-deformable during capacitive force sensing even when deflection of the flexible substrate 412 occurs in an area above the corresponding bracket portions 414a - 414d.

Second bracket portions 416a - 416d are positioned and configured for mounting of haptic devices 304. The precise configuration of the bracket portions 416a - 416d may vary. For example, second bracket portions 416b and 416d include respectively arm portions 602, 604 connecting a respective bracket portion to an edge portion 606 of the overall bracket assembly 508. On the other hand, second bracket portions 416a and 416c do not include an arm portion connecting the respective bracket portion to an edge portion. In other embodiments, all bracket portions 416a - 416c include an arm portion connecting the respective second bracket portion to an edge portion of the bracket assembly 508. In yet other embodiments, none of bracket portions 416a - 416c may include an arm portion connecting the respective second bracket portion to an edge portion of the bracket assembly 508. In certain embodiments, one or more haptic devices may be connected to the flexible substrate without any corresponding bracket portion supporting the haptic device.

Also shown are various gaps 418. As previously described, the gaps may be placed around portions of the bracket portions 416a - 416d to facilitate optimal functioning of the touch sensor devices 302 and to account for suboptimal tolerance and manufacturing variances of the haptic devices 304 and other components of the input device.

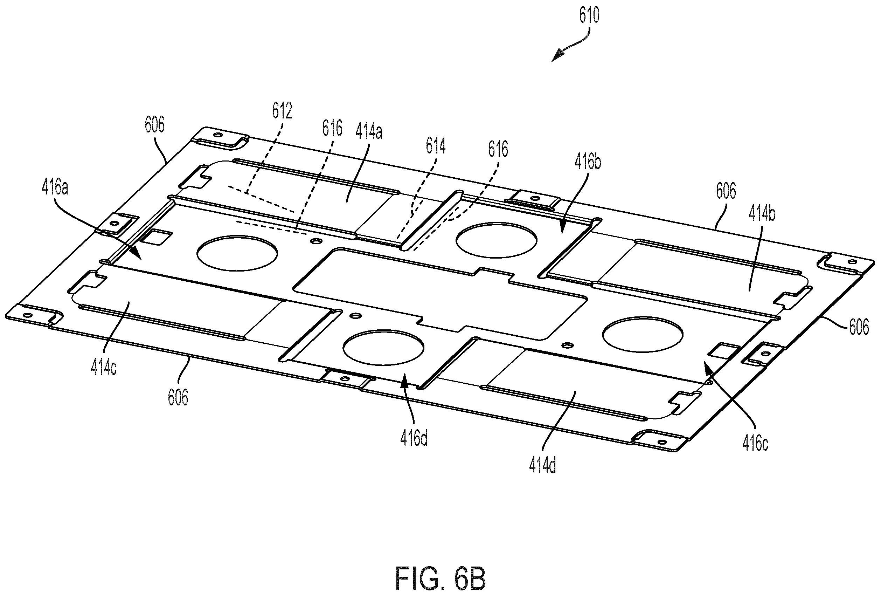

**FIG. 6B** illustrates an example of an alternative embodiment 610 of bracket assembly 508. The embodiment of **FIG. 6B** shows a different configuration of the first bracket portions 414a - 414d and the second bracket portions 416a - 416d as compared to **FIG. 6A****.** As previously described, the first 414a - 414d may be angled. The angle is reflected in the drawing by dashed lines 612 and 614 relative to horizontal line 616. The amount of angle may be adjusted as needed to facilitate accurate force sensing. The angle will typically be between 0 and 45 degrees, but any suitable angle may be employed.

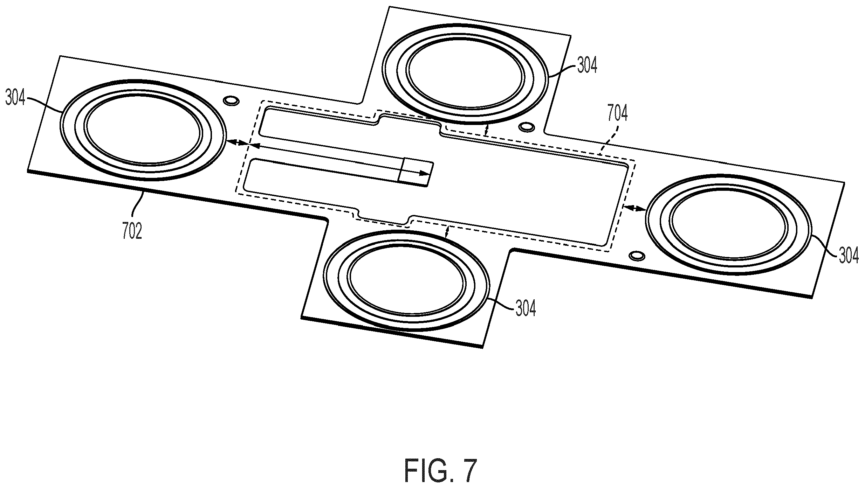

**FIG. 7** illustrates a haptic film assembly 700. In the exemplary embodiment, four haptic devices 304 are shown. The haptic devices may be disposed on PET film 702. The PET film may include traces 704 to facilitate coupling to circuitry such as processing system 205 or 110. Any suitable material may be used for traces 704 including, for example, silver ink..

The example of the film assembly 700 shown in **FIG. 7** is suitable for integration into the bracket assembly 508 shown in **FIG. 6B****.** However, the film assembly 700 may be any suitable size and shape to fit a corresponding bracket assembly. For example, the film assembly may be sized and shaped to fit the bracket assembly of **FIG. 6A****.**

The haptic film assembly 700 may be affixed to the bracket assembly 508. For example, the haptic film assembly 700 may be affixed to the bracket assembly 508 using an adhesive such as PSA.

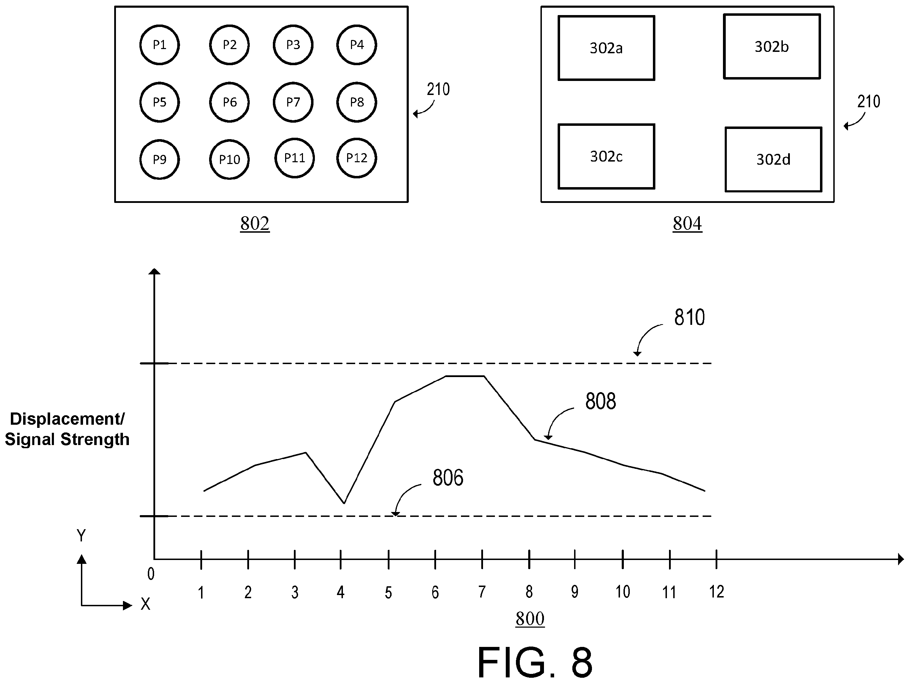

**FIG. 8** generally illustrates certain performance characteristics 800 of the touch sensor device relative to certain test points. In the example shown, top view 802 of a haptic sensor assembly 210 shows the relative location of twelve test points labelled P1 - P12. Top view 804 of the haptic sensor assembly 210 shows the relative location of four touch sensor devices 302a - 302d configured for force sensing. It will be understood that the number and placement of the touch sensor devices and test points, as shown, is for purposes of illustration and not limitation.

In one example, the y-axis reflects displacement of the flexible substrate 412 in the region of one or more of touch sensor devices 302a - 302d. In this case, exemplary line 808 reflects the magnitude of displacement of the touch sensor (e.g., across the surfaces of flexible substrate 412 and cover layer 432) at each of the test points P1 - P12 (x-axis) when subjected to a certain amount of force (f). As can be seen, the largest displacement occurs at areas away from the edges of the haptic sensor assembly 210. Conversely, the smallest displacement occurs near edges of the haptic sensor assembly 210. Of course, the line 808 is by way of example and the actual performance will vary depending on materials used and overall structure of the haptic sensor assembly and input device. In certain embodiments, the structure of the haptic sensor assembly 210 is configured such when integrated into the input device, all displacement values fall below a maximum displacement 810 at a certain force f. As but one example, the maximum displacement 810 may be .15 mm when subjected to a force 250 gram force (gf).

In another example, the y-axis may reflect the magnitude of signal strength from the touch sensor devices 302a - 302b when the test points P1 - P12 are subjected to certain amount of force (f). The magnitude of signal strength may be an absolute value or a delta, e.g., a difference from a measured value and a baseline value as previously described. In this case, line 808 reflects the magnitude of received signal (absolute or delta) at each of the test points P1 - P12 when subjected to the force (f). Here again, line 808 is merely provided as an example of performance, an actual performance will vary depending on materials used and overall structure of the haptic sensor assembly and input device. In certain embodiments, the combination of structure of the sensor subassembly 406 and haptic subassembly 404 are configured such when integrated into the input device, all signal strength values fall above a minimum strength value 806 at a certain force f. As but one example, the minimum strength value 806 may be 50 when subjected to a force 50 gf. This criteria can be maintained through configuration of the combination of structure of the sensor subassembly 406 and haptic subassembly 404 when integrated into the input device. Alternatively, or in combination with the foregoing, the processing system may provide compensation to ensure that measured values remain above the minimum strength value 806.

For purposes of illustration, the same curve of **FIG. 8** has been used to describe displacement and signal strength as both typically exhibit similar characteristics relative to the edges and center of the haptic sensor assembly. It will be appreciated that actual performance characteristics of displacement and signal strength may, and typically do, differ.

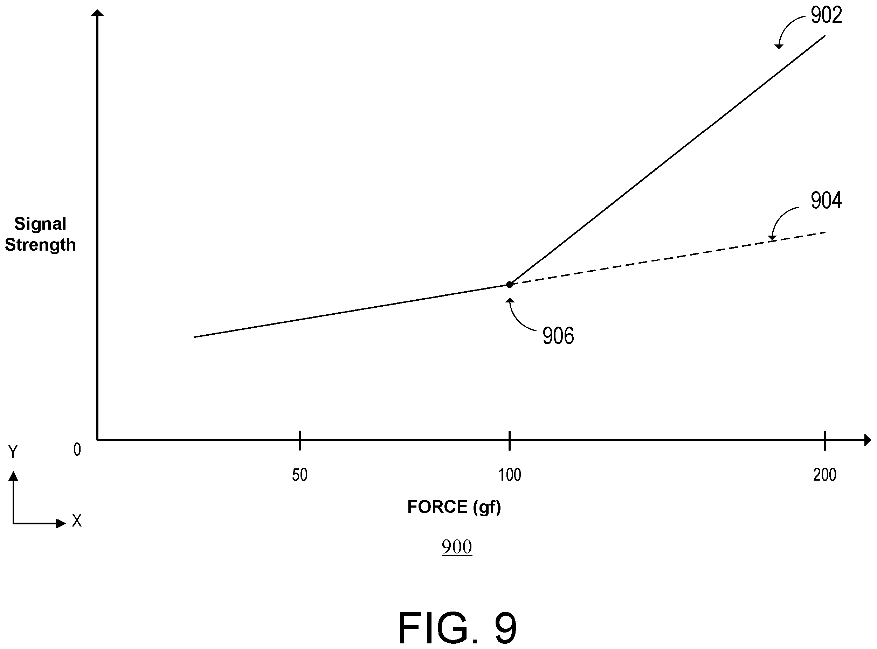

**FIG. 9** shows of magnitude of signal strength (y-axis) from a touch sensor devices 410a - 410d at a given test point P1 - P12 (see **FIG. 8****)** when subjected to various forces (x-axis). The response 902 shown is for one test point. It will be appreciated that each test point P1 - P12 may have a different response and that the response may vary depending on the structure of the haptic sensor assembly 210 and overall input device. As shown, the actual response 902 reflects nonlinearity e.g., an inflection point 906 at a particular amount of force. In the example, the inflection point 906 occurs at about 100 gf. In certain embodiments, it may be desirable to have a linear response at each test point. Linear response, represented by dashed line 904, can be obtained through configuration of the combination of structure of the sensor subassembly 406 and haptic subassembly 404 when integrated into the input device. Alternatively, or in combination with the foregoing, the processing system may provide compensation to provide a linear response, such as shown by line 904.

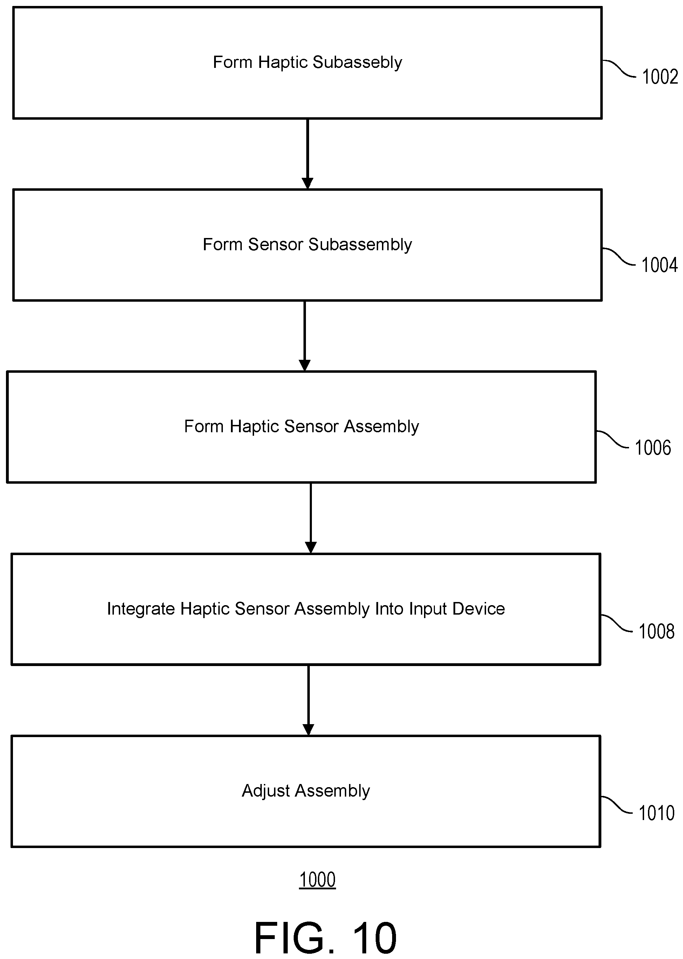

**FIG. 10** illustrates a method 1000 of making a haptic sensor assembly according to certain embodiments. It will be understood that the sequence shown in **FIG. 10** is by way of example. The various steps may be implemented in any order except where otherwise apparent from context. Further it will be appreciated that not all steps need be performed. For example, only certain steps need be performed where only a subassembly or portion of the overall assembly is desired.

In step 1002, a haptic subassembly is formed. Examples of haptic subassemblies are described in connection with **FIGs. 3****,** **4A- 4B** , and **5.** Generally, the haptic subassembly includes one or more haptic devices, such as haptic device 304. Any suitable haptic device may be employed. For example, the haptic device may be a piezoelectric device or actuator. The haptic subassembly may in certain embodiments be made in part from PET as previously described.

In certain embodiments, the piezoelectric devices are used without a support bracket. In other embodiments, the piezoelectric devices may be disposed on a support bracket such as the bracket assembly 508 **(****FIG. 4A** **-** **FIG. 4B****,** **FIG. 5****,** **FIG. 6A** - **6B**). As a more specific example, the piezo electric devices may be supported on a second bracket portion 416. The bracket assembly 508, or a portion of the bracket assembly 508 such as the first bracket portion 414, may be configured to be connected to a reference voltage as previously described.

Portions of the bracket assembly 508 such as the first bracket 414 portion may be angled to improve performance of force sensing around edges of the input device. The support bracket assembly 508 may, in certain implementations, include additional support structure for the input devices such as palm brackets 506. The bracket assembly 508 may be made of any suitable material. For example, the bracket assembly may be in whole or in part be made of a conductive material. An example of conductive material is sheet metal. In other embodiments, the support bracket, or portions of the support bracket, may be made of non-conductive material.

In step 1004, the sensor subassembly 406 is formed. An example of the sensor subassembly 406 is described in connection with **FIG. 4A** and **FIG. 4B****.** The sensor subassembly 406 is formed from a flexible substrate 412 which may in whole or in part be a PCBA assembly. The sensor subassembly 406 may include a touch sensor device 302 configured for force sensing and touch sensor device 303 configured for proximity sensing. The touch sensor device 302 and the touch sensor device 303 may be a capacitive touch sensor devices. The touch sensor devices 302, 303 may be formed by rows and columns of traces or other conductive material forming an array (rows and columns) of electrodes, e.g., transmitter and receiver electrodes that provide for transcapacitive or absolute capacitive sensing. The touch sensor device 303 may include a first one or more sets of electrodes for proximity sensing. The touch sensor device 302 may include a second one or more sets of electrodes for force sensing. The first and second sets of electrodes may be formed in different layers of the flexible substrate as shown in **FIG. 4A****.** The flexible substrate may include a processing system, such as processing system 110 or 205. The processing system may be coupled to the touch sensor devices 302, 303 and haptic devices 304.

In step 1006, the haptic sensor assembly is formed. The haptic sensor assembly is formed by affixing or bringing into the contact or proximity the sensor subassembly and the haptic subassembly. Affixing may include interposing between the sensor subassembly and haptic subassembly an adhesive layer, such as PSA or other suitable adhesive. Alternatively or in combination with adhesive, the sensor subassembly and the sensor assembly may be mechanically attached to each other by a securing device such as screws, a force fit or other suitable means. The haptic subassembly and sensor subassembly are in proximity such that haptic feedback may be sensed by a user.

In step 1008, the haptic sensor assembly may be incorporated into an input device. For example the haptic sensor assembly may be affixed to a frame structure of the input device using screws or other suitable securing means. Alternatively, the support bracket mentioned above may be an integral part of the input device. A cover layer 432, such as face sheet, may be applied over the haptic sensor assembly. For example, the cover layer 432 may be applied to a top surface of the sensor subassembly 406. In certain embodiments, the cover layer 432 may be affixed to the sensor subassembly 406 by using an adhesive such as PSA.

In step 1010, the haptic sensor assembly may be mechanically adjusted to meet certain performance requirements such as those described in connection with **FIGs. 8** - **9****.** Performance may also be adjusted by the processing system as previously described.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Exemplary embodiments are described herein. Variations of those exemplary embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A haptic sensor assembly, comprising:
a sensor subassembly, comprising:
one or more touch sensor devices configured to provide resulting signals corresponding to pressure from an input object;
a flexible substrate configured to deform in response to the pressure from the input object;
a haptic subassembly, comprising:
one or more haptic devices configured to provide haptic feedback in response to haptic signals corresponding to detecting pressure from the input object; and
a bracket assembly comprising a first bracket portion and a second bracket portion, wherein the one or more haptic devices are supported by the second bracket portion of the bracket assembly, and wherein the first bracket portion of the bracket assembly is disposed below the one or more touch sensor devices and configured to be coupled to a reference voltage.

2. The haptic sensor assembly according to claim 1, wherein the first bracket portion of the bracket assembly below the one or more touch sensor devices is angled such that a gap between the bracket assembly and the one or more touch sensor devices increases from an edge of the haptic sensor subassembly toward a center of the haptic sensor subassembly.

3. The haptic sensor assembly according to claim 1, wherein at least one of the one or more touch sensor devices include an array of sensing electrodes configured for capacitive sensing for determining a distance between the one or more touch sensor devices and the first portion of the bracket assembly.

4. The haptic sensor assembly according to claim 1, wherein at least one of the one or more touch sensor devices are further configured for proximity sensing.

5. The haptic sensor assembly according to claim 1, where in the one or more haptic devices comprise piezoelectric devices.

6. The haptic sensor assembly according to claim 5, wherein the piezoelectric devices are formed on a polyethylene terephthalate (PET) film.

7. The haptic sensor assembly according to claim 1, further comprising an adhesive layer interposed between the sensor subassembly and the haptic subassembly.

8. The haptic sensor assembly according to claim 1, where the bracket assembly is configured to be integrated into the frame of an input device.

9. The haptic sensor assembly according to claim 1, wherein the sensor subassembly further comprises one or more processors configured to determine the presence of the input object based on the resulting signals received from the one or more touch sensor devices and to provide the haptic signals to the one or more haptic devices to generate the haptic feedback.

10. An input device comprising:
a processing system and a memory configured to determine an amount of pressure applied by an input object and to provide haptic signals;
a sensor subassembly, comprising:
one or more touch sensor devices configured to provide resulting signals corresponding to pressure from the input object;
a flexible substrate configured to deform in response to the pressure from the input object;
a haptic subassembly, comprising:
one or more haptic devices configured to provide haptic feedback in response to the haptic signals; and
a bracket assembly comprising a first bracket portion and a second bracket portion, wherein the one or more haptic devices are supported by the second bracket portion of the bracket assembly, and wherein the first bracket portion of the bracket assembly is disposed below the one or more touch sensor devices and configured to be coupled to a reference voltage.

11. The input device according to claim 10, wherein the bracket assembly is configured to be attached to a frame of the input device; or
the input device further comprising a cover layer disposed above the sensor subassembly.

12. The input device according to claim 10, wherein the first bracket portion of the bracket assembly below the one or more touch sensor devices is angled such that a gap between the bracket assembly and the one or more touch sensor devices increases from an edge of the haptic sensor subassembly toward a center of the haptic sensor subassembly.

13. The input device according to claim 10, wherein the one or more touch sensor devices include an array of sensing electrodes configured for capacitive sensing for determining a distance between the one or more touch sensor devices and the first portion of the bracket assembly; or
wherein the one or more touch sensor devices are further configured for proximity sensing.

14. A method of making a haptic sensor assembly, comprising:
forming a support bracket comprising first bracket portions and second bracket portions;
forming a haptic subassembly comprising a plurality of haptic devices, wherein the plurality of haptic devices are in contact the second bracket portions;
forming a sensor subassembly comprising a flexible substrate and a plurality of force sensors, wherein the plurality of force sensors are configured for capacitive sensing; and
forming the haptic sensor assembly by bringing the haptic subassembly in contact with the sensor subassembly such that the first bracket portions are disposed below the plurality of force sensors.

15. The method according to claim 14, wherein forming the support bracket comprises forming the first bracket portions at an angle relative to the second bracket portions; or
the method further comprising forming one or more of the plurality of haptic devices on polyethylene terephthalate (PET) film; or
the method further comprising forming an array of capacitive sensing electrodes on the flexible substrate; or
the method further comprising forming a processing system on the flexible substrate.
